# FASCICULE DE BREVET EUROPEEN

(11) **EP 0 452 215 B1**
(45) Date de publication et mention de la délivrance du brevet: **08.06.1994**
(21) Numéro de dépôt: 91400960.0
(22) Date de dépôt: 10.04.1991
(51) Int. Cl.: A47J 31/40

(54) **Machine à café**
Kaffeemaschine
Coffee maker

(30) Priorité: 12.04.1990 FR 9004720
(43) Date de publication de la demande: 16.10.1991
(73) Titulaire: BONNET S.A., F-69400 VILLEFRANCHE-SUR-SAONE (FR)
(72) Inventeur: Courtois, Jean Loup, F-69400 Villefranche sur Saone (FR)
(74) Mandataire: Boutin, Antoine

(56) Documents cités:
- CH-A- 387 252

## Description

La présente invention est relative aux machines à café à usage professionnel qui sont destinées à produire, à chaque utilisation, une quantité d'infusion de café correspondant à une tasse de dégustation. Plus précisément elle concerne les machines du type comportant plusieurs godets d'infusion portés par un support rotatif apte à amener successivement chacun d'eux à l'endroit d'un poste particulier de travail appartenant à une série de postes ayant des fonctions différentes, et qui sont répartis sur une même trajectoire circulaire.

Le brevet CH 387.252 décrit une machine de ce genre dans laquelle il est prévu trois postes différents de travail à la suite d'un poste initial de remplissage en poudre de café, à savoir : un second poste de tassage, un troisième poste de versement d'eau chaude pour l'infusion du café et un quatrième poste de lavage, avant retour au poste initial. Ainsi dans cette machine il existe un poste intermédiaire de tassage de la poudre de café entre le poste initial de remplissage en poudre de café et le poste d'infusion. En conséquence à tout moment un godet rempli de poudre de café se trouve en stationnement d'attente à l'endroit du poste de tassage pendant que dans le godet précédent s'effectue une infusion de café. Ceci nuit à la qualité de la boisson obtenue puisque celle-ci n'est pas réalisée avec une poudre fraîchement moulue, mais avec une poudre qui a pu stationner pendant un certain temps à l'endroit du poste intermédiaire, si la machine n'est pas utilisée de façon continue.

Par ailleurs, une machine de ce genre a pour inconvénient qu'il se produit rapidement un encrassement des godets d'infusion. En effet, le lavage réalisé, dans le cadre d'un cycle de fonctionnement normal de production de boissons de café, ne peut pas être suffisamment efficace pour éliminer toutes les particules de poudre de café attachées aux parois des godets d'infusion, et ceci d'autant plus qu'il est impossible d'y introduire des produits lessiviels. Or, en cas d'encrassement d'une machine de ce genre, il est nécessaire de recourir à l'intervention d'un dépanneur spécialisé, ce qui risque d'interdire l'utilisation de la machine correspondante pendant une période de temps importante, avec tous les inconvénients qui peuvent en résulter pour un débit de boissons.

D'autre part, les machines du type en cause, qui existent actuellement, comportent des mécanismes particulièrement complexes, ce qui augmente leur prix de revient ainsi que les risques de pannes. Ceci est notamment le cas dans la machine selon le CH 387.252. En effet, dans cette machine les godets d'infusion sont répartis à la périphérie d'un plateau qui subit, à chaque utilisation, une série de mouvements différents : un mouvement axial de descente, un mouvement de rotation partielle et un mouvement axial de remontée. Ceci implique donc la présence d'un mécanisme particulièrement complexe avec les inconvénients qui en découlent, tant sur le plan du prix de revient que sur celui de la fiabilité.

C'est pourquoi la présente invention a pour but de réaliser une machine à café conçue de façon à éliminer l'ensemble de ces inconvénients.

A cet effet, cette machine est caractérisée en ce qu'elle comporte deux séries de postes de travail appartenant à deux cycles différents de fonctionnement, et disposés sur une même trajectoire circulaire, à savoir :
a) pour un cycle de fonctionnement normal, successivement :
   - un poste initial de remplissage en poudre de café,
   - un second poste, diamétralement opposé, où s'effectue immédiatement après, à la fois le tassage de la poudre, puis le versement de la dose prévue d'eau chaude pour l'infusion du café, le dispositif de commande des déplacements du support rotatif des godets d'infusion étant apte à amener chacun d'eux directement du poste initial au poste d'infusion sans arrêt intermédiaire,
   - un troisième poste d'évacuation du marc de café, sans arrêt du support rotatif des godets d'infusion, et au cours du même mouvement de rotation de celui-ci.
b) et, pour un cycle particulier de nettoyage, successivement :
   - un poste de dépose d'un produit lessiviel, situé entre les deux premiers postes du cycle normal,
   - un poste de versement d'eau chaude pour l'opération proprement dite de nettoyage, ce poste étant constitué par le second poste du cycle normal.

Grâce à la conception ainsi prévue, le godet qui a reçu une dose de poudre de café fraîchement moulu passe immédiatement au poste d'infusion à l'endroit duquel s'effectue également le tassage préalable de la poudre. Dans ces conditions l'infusion de café est toujours réalisée avec de la poudre fraîchement moulue, ce qui permet d'obtenir un café d'une qualité meilleure que dans les machines antérieures du même genre. Par ailleurs les risques d'encrassement se trouvent éliminés du fait de l'existence d'un cycle particulier de nettoyage, qui est distinct du cycle normal de production de boissons de café, et qui permet un nettoyage parfaitement efficace. De plus, les mécanismes de la présente machine sont particulièrement simples puisque le support rotatif des godets d'infusion effectue uniquement un mouvement partiel de rotation à chaque mise en fonctionnement de la machine, et ce aussi bien dans le cas du cycle particulier de nettoyage que dans celui du cycle normal de production de boissons de café.

Selon une autre caractéristique de la présente machine, le dispositif de commande de celle-ci assure automatiquement le déclenchement du cycle de nettoyage à chaque arrêt complet du fonctionnement de la machine, ce cycle pouvant en plus être déclenché par l'utilisateur à tout autre moment choisi par celui-ci.

Selon une autre caractéristique encore chaque godet d'infusion comporte un filtre inférieur démontable, et il est prévu, dans le cycle particulier de nettoyage, un poste supplémentaire situé après le poste de versement d'eau chaude, ce poste supplémentaire étant agencé pour permettre le retrait des pièces démontables prévues dans chaque godet d'infusion, inclus le filtre inférieur, afin de pouvoir procéder éventuellement à leur nettoyage complet à la main. Ceci élimine donc radicalement tout risque d'encrassement de la présente machine.

Cependant d'autres particularités et avantages de la machine à café selon l'invention apparaîtront dans la description qui va suivre d'un exemple de réalisation de celle-ci, et ce en référence aux dessins annexés, sur lesquels :

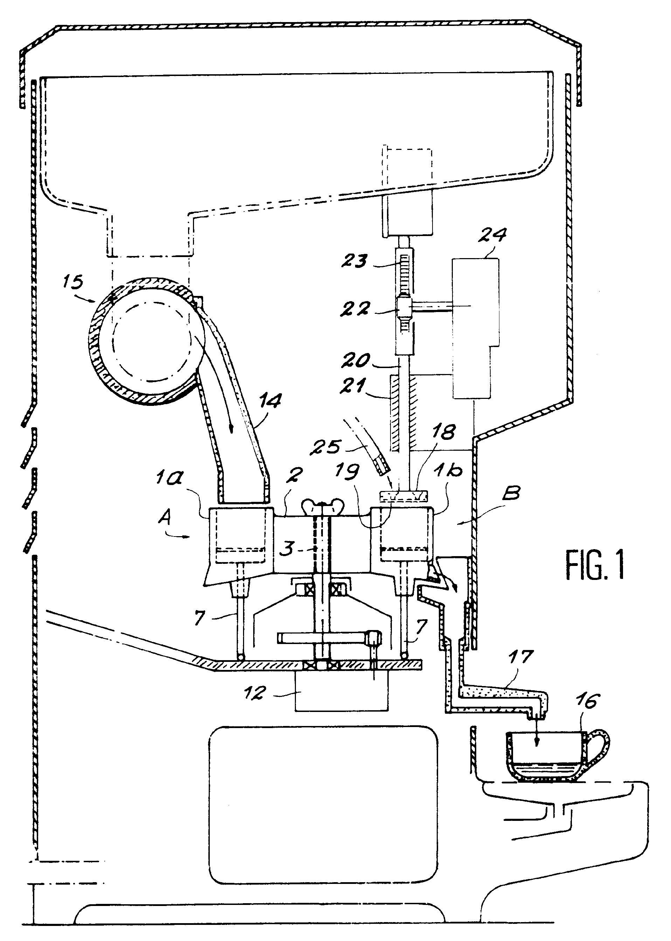

la figure 1 est une vue en coupe d'une machine à café selon l'invention, selon un plan vertical passant par la ligne I-I de la figure 2,
la figure 2 est un schéma illustrant la position, dans un même plan horizontal, des différents postes de travail prévus dans cette machine,
la figure 3 est une vue partielle en coupe selon un plan vertical passant par la ligne III-III de la figure 2,
la figure 4 est un diagramme illustrant les opérations effectuées aux différents postes de travail dans un cycle normal de production de boissons de café,
la figure 5 est une vue similaire correspondant au cycle particulier de nettoyage.
la figure 6 est une demi-vue en coupe à échelle agrandie d'une variante de réalisation du piston de tassement.

La machine représentée comporte seulement deux godets 1a et 1b d'infusion de café, lesquels sont disposés dans des positions diamétralement opposées sur un support commun 2 qui peut affecter la forme d'une simple barre reliant ces deux godets. De préférence, l'ensemble est constitué par une pièce d'un seul tenant en alliage métallique moulé. Cet ensemble est monté de façon amovible sur un arbre vertical 3 disposé au centre et qui est susceptible de l'entraîner en rotation. Cette fixation peut être assurée par un écrou papillon 4 ou tout autre organe de fixation aisément démontable.

Chaque godet 1a ou 1b renferme, dans son fond, un piston 5 percé d'un certain nombre de trous et qui est pourvu d'une grille amovible 6 de filtration. Ce piston est porté par une tige 7 montée librement coulissante dans un alésage 8 prévu dans le fond du godet correspondant. Dans sa position normale le piston 5 repose contre le fond de ce godet et se trouve ainsi situé au dessus d'un ajutage 9 de sortie du liquide d'infusion. Dans cette position la tige 7 du piston de filtration fait saillie au dessous du godet correspondant, son extrémité inférieure prenant alors appui sur une piste circulaire 10 dont le role sera exposé plus loin.

Par l'intermédiaire d'une série d'engrenages contenus dans un carter de protection 11, l'entraînement de l'arbre rotatif 3 est assuré au moyen d'un moteur électrique 12. Celui-ci consiste en un moteur d'un type particulier, en l'occurrence un moteur dit "pas à pas", qui est asservi à une unité de commande apte à fournir des impulsions nécessaires pour déterminer des déplacements angulaires d'amplitude précise pour le support rotatif 2 des deux godets 1a et 1b. Ceci permet donc d'amener successivement chacun de ces godets à l'endroit d'un poste particulier de travail appartenant à une série de postes ayant des fonctions différentes.

Ainsi les changements de positions des godets d'infusion sont obtenus avec précision sans employer des butées de fin de course, ou systèmes similaires qui ont l'inconvénient de se dérégler. Cette technologie permet donc d'obtenir une fiabilité excellente de la présente machine.

La machine selon l'invention présente la particularité de comporter deux séries distinctes de postes de travail qui appartiennent à deux cycles différents de fonctionnement, à savoir un cycle de fonctionnement normal pour la confection de boissons de café, et un second cycle particulier de nettoyage. Cependant, les différents postes de ces deux séries sont répartis angulairement sur une même trajectoire circulaire 13 dont le centre O coïncide avec celui de l'arbre 3, l'un au moins de ces postes pouvant être commun aux deux cycles de travail. En plus de ces deux cycles de fonctionnement, il est également prévu un cycle de rinçage utilisant les postes de travail du cycle de fonctionnement normal, et qui sera décrit plus loin.

Le cycle de fonctionnement normal comprend successivement les trois postes suivants :
- un poste initial A de remplissage en poudre de café au dessus duquel il est prévu une tuyère 14 d'alimentation branchée sur la sortie d'un moulin à café 15, la mise en marche de ce moulin, pour la mouture d'une dose déterminée de café, étant occasionnée par la mise en fonctionnement de la présente machine,
- un second poste B diamétralement opposé, où s'effectue l'infusion de la poudre de café pour délivrer une quantité déterminée de boisson dans une tasse 16 de dégustation, et ce par l'intermédiaire d'un bec verseur 17,
- et un troisième poste C d'évacuation du marc de café, ce poste étant situé entre les postes B et A.

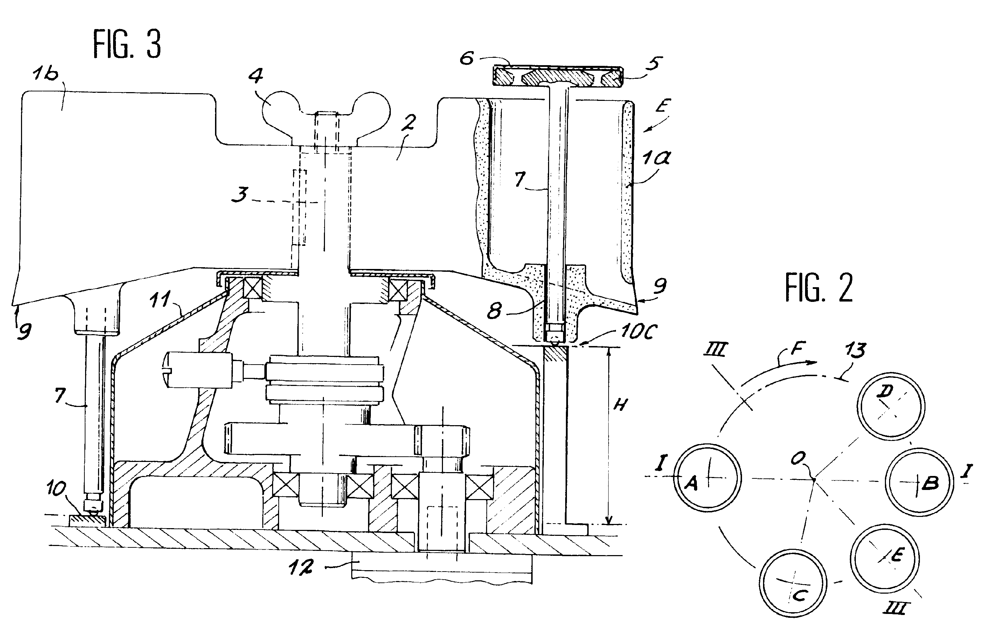

Du reste, la figure 2 représente les positions angulaires respectives de ces trois postes, étant entendu que le support 2 des godets de filtration est entraîné en rotation dans le sens de la flèche F.

Il convient de noter que l'unité de commande du moteur 12 est apte à imprimer chaque fois un demi tour de rotation au support 2 de façon à faire passer chaque godet d'infusion directement du poste de remplissage A jusqu'au poste d'infusion B. L'autre godet passe évidemment du poste B au poste A, sans qu'il y ait de stationnement à l'endroit du poste C d'évacuation du marc de café. Ceci est du reste indispensable pour que le godet qui vient de recevoir de la poudre de café au poste A passe directement au poste d'infusion B.

Il faut également observer que ce poste B est conçu pour assurer à la fois le tassage préalable de la poudre de café puis le versement de la dose prévue d'eau chaude pour l'infusion. L'opération de tassage est assurée par un piston presseur 18 pourvu d'une grille amovible 19. La tige 20 de ce piston est montée coulissante dans un bloc de guidage 21 et elle est entraîné en mouvement par l'intermédiaire d'un pignon 22 engrénant avec un système de vis-écrou 23. Ce pignon est lui-même entraîné par un moteur électrique 24 à courant continu. Compte-tenu de ce fait on peut connaître le couple que développe ce moteur en mesurant simplement l'intensité du courant qu'il traverse. Ceci permet donc de déterminer les conditions dans lesquelles le café moulu est tassé. Du reste on peut ainsi mémoriser la valeur de l'intensité à prévoir pour un tassement éventuel de la poudre de café. Quelle que soit la quantité de café placée dans le godet d'infusion correspondant, on peut donc toujours avoir de la poudre tassée de la même manière.

Immédiatement après le tassage de la poudre de café, une dose déterminée d'eau chaude est versée dans le godet d'infusion situé à l'endroit du poste B, et ce à partir d'une conduite 25 débouchant au dessus de ce poste. Les moyens d'alimentation de cette conduite en eau chaude n'ont pas lieu d'être décrits car ils s'agit de moyens classiques dans les machines à café de ce genre.

Grâce au fait que chaque godet d'infusion passe immédiatement du poste A au poste B, l'infusion de café est réalisée à partir de poudre de café fraîchement moulu. Ceci permet donc d'obtenir, pour la boisson réalisée, une bien meilleure qualitée que dans les machines actuelles du même genre.

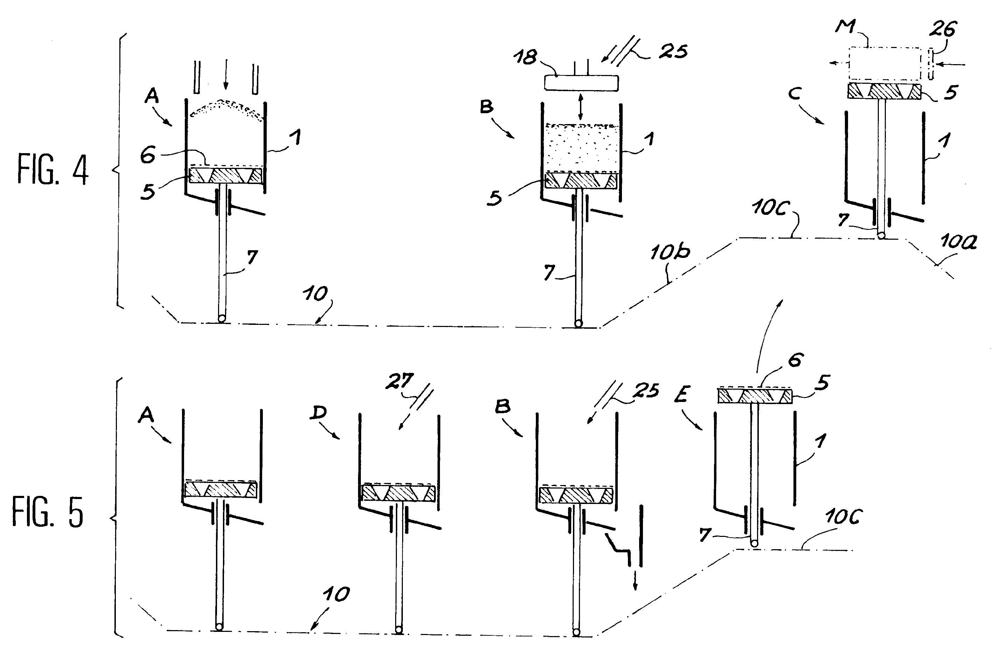

Comme déjà indiqué le poste C d'évacuation du marc de café M est un poste à l'endroit duquel chaque godet 1a et 1b ne fait que passer sans s'arrêter. A l'endroit de ce poste la piste circulaire 10 déjà mentionnée comporte une partie 10c en surélévation de part et d'autre de laquelle sont prévues des rampes de raccordement 10a et 10b. Ainsi après qu'un godet 1a ou 1b ait quitté le poste B, l'extrémité inférieure de la tige 7 du piston de filtration 5 correspondant est amenée à glisser sur la rampe ascendante 10b pour parvenir sur la partie surélevée 10c. Ceci provoque donc un soulèvement du piston 5 au dessus du godet correspondant comme représenté sur la partie droite de la figure 4. Or à l'endroit du poste C il est prévu une raclette fixe 26 qui est apte à provoquer l'évacuation du marc de café M se trouvant sur le dessus du piston 5, et ce du fait même que le godet correspondant 1a ou 1b défile alors au dessous de cette raclette. Cependant, grâce à la rampe descendante 10a le piston 5 revient ensuite dans sa position initiale avant même que le godet atteigne à nouveau le poste de remplissage A.

Pour sa part, le cycle particulier de nettoyage comprend successivement, outre le poste initial A qui est commun au cycle de fonctionnement normal :
- un poste D de dépose d'un produit lessiviel à partir d'une conduite 27 d'alimentation, ce poste étant situé entre les deux premiers postes A et B du cycle normal,
- un second poste de déversement d'eau chaude pour l'opération proprement dite de nettoyage, ce poste étant constitué par le second poste B du cycle normal,
- un troisième poste E pour le démontage éventuel des pièces amovibles prévues dans chaque godet d'infusion, ce poste étant situé après le poste B de déversement d'eau chaude.

L'unité de commande de la présente machine est programmée de façon que, lors de l'exécution du cycle particulier de nettoyage, il n'y ait pas déversement de poudre de café à l'endroit du poste initial A et que le piston presseur 18 n'entre pas en action à l'endroit du poste B. Bien entendu cette unité est également programmée de façon à imprimer dans un tel cas des déplacements angulaires différents de ceux prévus dans le cas du cycle normal de fonctionnement, afin que chaque godet soit amené à stationner successivement à l'endroit des différents postes A, B, D et E.

En ce qui concerne ce dernier poste E, il faut noter qu'il est prévu au dessus de la partie surélevée 10c de la piste circulaire 10. Ainsi à cet endroit le piston 5 se trouve repoussé au dessus du godet correspondant 1, comme représenté sur la partie droite de la figure 5. Il est donc extrêmement facile de saisir à la main ce piston avec sa grille amovible 6 de filtration pour retirer l'ensemble hors du godet correspondant 1. Ceci permet de nettoyer complètement ces deux postes en dehors de la machine, et par suite d'en assurer un nettoyage parfaitement efficace, la grille 6 pouvant être alors séparée du piston 5. De son côté la grille amovible 19, équipant le piston presseur 18, peut également être démontée pour effectuer son nettoyage en dehors de la machine. Quant au piston 18 il peut être aisément nettoyé lorsqu'un godet 1a ou 1b se trouve à l'endroit du poste de démontage E. En effet dans un tel cas le poste B est libéré de la présence de tout godet d'infusion puisque ceux-ci sont disposés dans des positions diamétralement opposées. Il est alors très facile d'accéder à ce piston presseur 18 pour le nettoyer complètement.

Grâce à l'existence d'un cycle particulier de nettoyage, il est possible de réaliser un nettoyage parfaitement efficace des godets de filtration et des différentes pièces équipant ceux-ci. Ceci permet donc d'éviter les risques d'encrassement qui existent dans les machines antérieures du même genre, et par suite les inconvénients qui en découlent. Du reste le nettoyage réalisé est d'autant plus efficace qu'il est prévu la possibilité de démonter, à l'endroit du poste E, les pièces amovibles équipant chaque godet d'infusion. Par ailleurs, si besoin est, il est même possible de démonter complètement l'ensemble constitué par les deux godets 1a et 1b pour nettoyer ceux-ci en dehors de la machine. A cet effet il suffit de dévisser l'écrou 4 assurant la fixation amovible de cet ensemble.

L'unité de commande de la présente machine est agencée de façon à commander automatiquement le déclenchement du cycle particulier de nettoyage lors de chaque arrêt complet de fonctionnement de la machine, par exemple en fin de journée ou lors de la fermeture du débit de boissons équipé de la présente machine. Cependant l'unité de commande permet que l'utilisateur puisse également déclencher lui-même ce cycle de nettoyage, à tout moment choisi par lui, par exemple s'il juge qu'il existe un risque d'encrassement des filtres et des godets d'infusion.

Le cycle de rinçage, qui existe en plus du cycle de fonctionnement normal et du cycle de nettoyage, utilise les postes du premier de ces deux cycles. Cependant, lors de l'exécution de ce cycle de rinçage, l'unité de commande de la machine supprime l'opération de déversement de poudre de café à l'endroit du poste initial A, ainsi que l'opération de tassage au poste B. Il y a donc seulement déversement d'eau chaude à l'endroit du poste B, ce qui assure le rinçage prévu.

Or l'unité de commande de la machine est asservi à un système apte à contrôler la durée de remplissage d'une tasse de café, et l'agencement est tel que lorsque cette durée dépasse un temps pré-déterminé, correspondant au temps normal d'écoulement de l'eau à travers la poudre de café, ce système de contrôle agit sur le dispositif de commande de façon que celui-ci déclenche alors le cycle de rinçage. Ainsi dès qu'il existe un début de stagnation de résidus de poudre de café usagée, entraînant une augmentation du temps d'écoulement de l'eau à travers la poudre de café, ceci déclenche automatiquement un cycle de rinçage en évitant par là même tout risque d'encrassement. Cependant l'unité de commande permet également que ce cycle de rinçage puisse être déclenché volontairement pas l'utilisateur à tout moment choisi par lui.

Il convient de rappeler que le mécanisme prévu dans la présente machine est relativement simple puisqu'il suffit d'impartir des déplacements angulaires déterminés au support rotatif 2 des deux godets d'infusion. Or, ces déplacements peuvent être commandés avec précision grâce à l'utilisation du moteur 12 de type "pas à pas". L'unité de commande de la machine comporte donc un microprocesseur afin de fournir les impulsions nécessaires à ce moteur, l'ensemble comprenant également un séquenceur et une alimentation de puissance.

L'utilisation d'une telle unité de commande comportant un microprocesseur permet de mémoriser de nombreux paramètres dans ledit microprocesseur afin de piloter plusieurs éléments de la machine. C'est ainsi que l'unité de commande pourra commander le moulin à café 15 en le faisant fonctionner durant une durée prédéterminée afin d'obtenir la quantité de café moulu désirée.

Par ailleurs, comme déjà indiqué, cette unité de commande est conçue pour assurer le déclenchement du cycle de nettoyage et celui du cycle de rinçage dans les conditions déjà décrites.

Bien entendu la machine à café selon l'invention n'est pas limitée à l'exemple de réalisation décrit ci-dessus. Ainsi dans cet exemple, il est prévu seulement deux godets d'infusion, situés dans des positions diamétralement opposées sur leur support rotatif 2, auquel cas les deux postes A et B du cycle normal, sont également situés dans des positions diamétralement opposées pour qu'il y ait passage direct de chaque godet du poste A au poste B. Cependant le support rotatif 2 pourrait porter un plus grand nombre de godets d'infusion en prévoyant alors des positions angulaires appropriées des deux postes A et B pour qu'il y ait toujours passage direct de chaque godet du poste initial A jusqu'au poste B d'infusion sans arrêt intermédiaire. Dans un tel cas, pendant le cycle de fonctionnement normal, il y aurait des arrêts intermédiaires sur le trajet de retour depuis le poste B jusqu'au poste A, sans que ces arrêts correspondent à des postes de travail.

En raison de ses avantages, la machine à café selon l'invention est plus particulièrement destinée à être utilisée dans des débits de boissons, ou des restaurants de collectivités, ou similaires, pour la fourniture de boissons de café aux consommateurs.

Selon une variante de réalisation, la machine à café ainsi décrite comporte un perfectionnement qui permet de mieux contrôler le tassement de la poudre à café.

En effet, le piston presseur 18 comporte sur tout son pourtour un joint afin d'obtenir une bonne étanchéïté entre le piston 18 presseur et la paroi interne des godets 1a ou 1b. Cette disposition présente l'inconvénient que le joint frotte contre les parois de godet et que ce frottement ajoute une force supplémentaire à vaincre pour le moteur 24, force qui n'est pas constante de sorte que le tassement du café n'est pas constant.

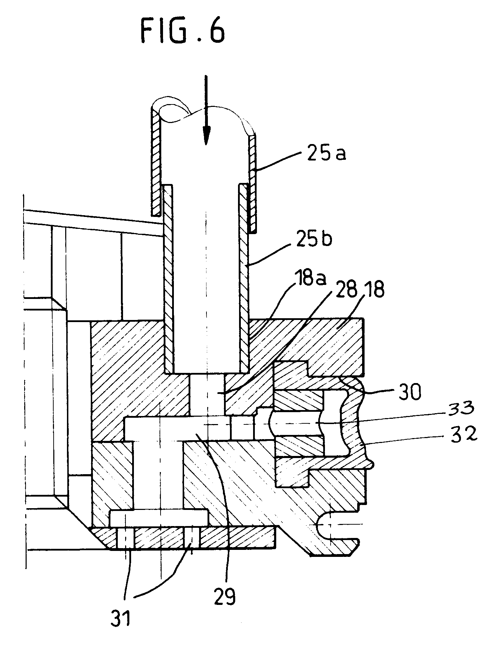

Pour pallier cet inconvénient, on a imaginé comme cela est représenté à la figure 6, de disposer un joint creux qui est gonflé par l'eau chaude d'infusion.

En se reportant à cette figure on voit que la conduite 25, au lieu d'être une conduite fixe qui débouche librement au-dessus du piston 18, comporte une partie souple 25a qui s'emmanche sur un tube 25b qui est serti dans un alésage 18a du piston 18.

Le fond de cet alésage 18 communique, par une canalisation 28, avec d'une part une canalisation radiale 29 qui débouche dans une gorge 30 et d'autre part une pluralité de canalisations 31 par lesquelles l'eau chaude va s'écouler dans la poudre à café contenue dans le godet 1.

La gorge 30 est une gorge circulaire, ménagée sur tout le pourtour du piston 18. Dans cette gorge est disposé un joint 32 qui est creux et qui communique par un orifice 33 avec la canalisation 29.

Il en résulte que l'eau arrivant par la canalisation souple 25a va remplir la canalisation 29 et en passant par l'orifice 33 va provoquer le gonflement du joint 32.

Il est ainsi possible de déterminer le diamètre du piston 18 et de son joint 32 de façon que lorsque le joint est vide, le piston 18 puisse pénétrer avec jeu dans le godet. Puis, lorsque le piston 18 a pressé le café jusqu'à ce que le couple de tassage désiré soit atteint, la pompe émet de l'eau chaude et cette eau gonfle le joint 32 et réalise ainsi l'étanchéité entre le piston et le godet pendant toute la durée de l'infusion. Lorsque l'infusion est terminée, la pompe s'arrête, la chambre d'infusion se décompresse, le joint 32 se dégonfle et le piston 18 peut remonter sans frottement.

## Revendications

1. Machine à café du type comportant plusieurs godets d'infusion portés par un support rotatif apte à amener successivement chacun d'eux à l'endroit d'un poste particulier de travail, appartenant à une série de postes ayant des fonctions différentes, dont un poste de remplissage en poudre de café et un poste de versement d'eau pour l'infusion du café, caractérisée en ce que cette machine comporte deux séries de postes de travail appartenant à deux cycles différents de fonctionnement, et disposés sur une même trajectoire circulaire :
a) pour un cycle de fonctionnement normal, successivement :
- un poste initial (A) de remplissage en poudre de café,
- un second poste (B), où s'effectue immédiatement après, à la fois le tassage de la poudre, puis le versement de la dose prévue d'eau chaude pour l'infusion du café, le dispositif de commande des déplacements du support rotatif des godets d'infusion (1a, 1b) étant apte à amener chacun d'eux directement du poste initial (A) au poste (B) sans arrêt intermédiaire,
- un troisième poste (C) d'évacuation du marc de café, sans arrêt du support rotatif des godets d'infusion, et au cours du même mouvement de rotation de celui-ci.
b) et, pour un cycle particulier de nettoyage, successivement :
- un poste (D) de dépose d'un produit lessiviel, situé entre les deux premiers postes (A et B) du cycle normal,
- un poste de versement d'eau chaude pour l'opération proprement dite de nettoyage, ce poste étant constitué par le second poste (B) du cycle normal.

2. Machine à café selon la revendication 1, caractérisée en ce que chaque godet (1a et 1b) d'infusion comporte un piston inférieur démontable (5) de filtration équipé d'une grille amovible (6), et il est prévu, dans le cycle particulier de nettoyage, un poste supplémentaire (E) situé après le poste (B) de versement d'eau chaude, ce poste supplémentaire (E) étant agencé pour permettre le retrait des pièces démontables prévues dans chaque godet d'infusion afin de pouvoir procéder éventuellement à leur nettoyage complet à la main.

3. Machine à café selon l'une des revendications précédentes, caractérisée en ce que son dispositif de commande assure automatiquement le déclenchement du cycle particulier de nettoyage à chaque arrêt complet du fonctionnement de la machine, ce cycle pouvant en plus être déclenché par l'utilisateur à tout autre moment choisi par celui-ci.

4. Machine à café selon l'une des revendications précédentes, caractérisée en ce qu'elle comporte en outre un cycle de rinçage comprenant les mêmes postes de travail que le cycle de fonctionnement normal, mais avec cette différence qu'il n'y a pas déversement de poudre de café au poste initial (A), et en ce que le dispositif de commande est asservi à un système de contrôle de la durée de remplissage d'une tasse de café, l'agencement étant tel que lorsque cette durée dépasse un temps pré-déterminé, ce système de contrôle agit sur le dispositif de commande de façon que celui-ci déclenche alors le cycle de rinçage.

5. Machine à café selon l'une des revendications précédentes, caractérisée en ce qu'à l'endroit du second poste (B) du cycle normal, un piston presseur (18), destiné à assurer le tassage de la poudre de café, est actionné par un moteur (24) à courant continu et il est prévu des moyens de contrôle de l'intensité du courant traversant ce moteur afin d'obtenir de manière précise un tassement déterminé de la poudre de café.

6. Machine à café selon l'une des revendications précédentes, caractérisée en ce que le support (2) des deux godets (1a et 1b) d'infusion est monté de façon amovible sur un arbre vertical (3) entraîné en rotation par un moteur électrique (12) de type "pas à pas", la fixation de ce support (2) étant assurée par un écrou papillon (4) ou autre organe de fixation aisément démontable.

7. Machine à café selon l'une quelconque des revendications précédentes, caractérisée en ce que le piston (18) porte un joint d'étanchéïté creux (32) qui est gonflé par l'eau chaude fournie par la pompe, de façon à permettre de réaliser un piston (18) de dimensions telles qu'il puisse entrer et sortir du godet sans frottement.

8. Machine à café selon la revendication 7, caractérisée en ce que le joint d'étanchéïté (32) communique par l'intérieur du piston (18) avec une canalisation souple (25a) d'amenée d'eau chaude.

## Patentansprüche

1. Kaffeemaschine mit mehreren Aufgußbehältern, die auf einem Umlaufträger angeordnet sind, wobei der Träger geeignet ist, nacheinander jeden dieser Aufgußbehälter an eine bestimmte Arbeitsgangstation zu bewegen, die zu einer Reihe von Arbeitsgangstationen mit verschiedenen Funktionen gehört, darunter eine Füllstation für das Kaffeepulver und eine Wassereingießstation für das Aufgießen des Kaffees; dadurch gekennzeichnet, daß sie zwei Reihen von Arbeitsgangstationen beinhaltet, die zu zwei verschiedenen Betriebskreisläufen gehören und auf derselben Kreisbahn laufen:
a) für einen normalen Betriebsdurchlauf nacheinander:
- eine Anfangsfüllstation (A) für das Kaffeepulver,
- eine zweite Arbeitsgangstation (B), an welcher sofort im Anschluß gleichzeitig das Pulver verdichtet und die für den Aufguß des Kaffees vorgesehene Menge heißen Wassers eingegossen wird; das Bedienungselement zur Bewegungssteuerung des Umlaufträgers mit den Aufgußbehältern (1a, 1b) ist dazu geeignet, jeden Behälter ohne Zwischenstopp direkt von der Anfangsfüllstation (A) zur Arbeitsgangstation (B) zu bewegen.
- eine dritte Arbeitsgangstation (C), an welcher der Kaffeesatz ohne Anhalten des Umlaufträgers der Aufgußbehälter in einer Drehbewegung desselben entleert wird.
b) für einen speziellen Reinigungsdurchlauf nacheinander:
- eine Abgabestation (D) für ein Reinigungsmittel, die zwischen den beiden ersten Arbeitsgangstationen (A und B) des normalen Betriebsdurchlaufs liegt,
- eine Heißwassereingießstation für den eigentlichen Reinigungsvorgang; wobei diese Station von der zweiten Arbeitsgangstation (B) des normalen Betriebsdurchlaufs gebildet ist.

2. Kaffeemaschine nach Anspruch 1, dadurch gekennzeichnet, daß jeder Aufgußbehälter (1a und 1b) einen herausnehmbaren Filterunterkolben (5) aufweist, der mit einem abnehmbaren Gitter (6) versehen ist, wobei innerhalb des speziellen Reinigungsdurchlaufs eine zusätzliche Arbeitsgangstation (E) vorgesehen ist, die hinter der Heißwassereingießstation liegt, und wobei diese zusätzliche Arbeitsgangstation (E) sich dort befindet, um das Entfernen der herausnehmbaren Teile zu ermöglichen, die Bestandteil jedes Aufgußbehälters sind, um eventuell per Hand eine vollständige Reinigung vorzunehmen.

3. Kaffeemaschine nach einem der vorhergehenden Ansprüche, dadurch gekennzeichnet, daß ihr Bedienungselement automatisch bei jedem völligen Betriebsstillstand der Maschine den speziellen Reinigungsdurchlauf startet, dieser Arbeitsgang kann jedoch auch zu jedem beliebigen Moment vom Benutzer gestartet werden.

4. Kaffeemaschine nach einem der vorhergehenden Ansprüche, dadurch gekennzeichnet, daß sie zusätzlich einen Spüldurchlauf ausführt, der dieselben Arbeitsgangstationen betrifft wie der normale Betriebsdurchlauf, jedoch mit dem Unterschied, daß bei der Ausgangsstation (A) keine Ausschüttung von Kaffeepulver stattfindet, und daß das Bedienungselement gekoppelt ist an eine Zeitkontrolle für die Dauer einer Füllung einer Tasse Kaffee, die so ausgelegt ist, daß dieses Kontrollsystem auf das Bedienungselement einwirkt und bewirkt, daß dieses den Spüldurchlauf startet, wenn dieser Vorgang eine vorab festgelegte Zeitspanne überschreitet.

5. Kaffeemaschine nach einem der vorhergehenden Ansprüche, dadurch gekennzeichnet, daß sie im Bereich der zweiten Arbeitsgangstation (B) des normalen Betriebsdurchlaufs über einen Druckkolben (18) verfügt, der einer verbesserten Verdichtung des Kaffeepulvers dient und von einem Gleichstrommotor (24) angetrieben wird, der wiederum mit Kontrollmechanismen ausgestattet ist, die es erlauben, mittels der Größe des über den Motor laufenden Stroms den Grad der Verdichtung des Kaffeepulvers genau zu bestimmen.

6. Kaffeemaschine nach einem der vorhergehenden Ansprüche, dadurch gekennzeichnet, daß der Träger (2) der beiden Aufgußbehälter (1a und 1b) abnehmbar auf einer senkrechten Welle (3) sitzt, die von einem als Schrittmotor ausgebildeten Elektromotor (12) in Drehbewegung versetzt wird, wobei die Befestigung dieses Trägers (2) mittels einer Flügelmutter (4) oder eines anderen leicht zu entfernenden Befestigungselements erfolgt.

7. Kaffeemaschine nach einem der vorhergehenden Ansprüche, dadurch gekennzeichnet, daß der Kolben (18) mit einer Hohldichtung (32) versehen ist, die sich mittels dem von der Pumpe gelieferten heißen Wasser ausdehnt, so daß der Kolben (18) derartige Abmessungen aufweist, daß er reibungslos in den Behälter ein- und aus ihm austreten kann.

8. Kaffeemaschine nach dem Patentanspruch 7, dadurch gekennzeichnet, daß die Dichtung (32) über das Innere des Kolbens (18) mit einer flexiblen Zuleitung (25a) für heißes Wasser verbunden ist.

## Claims

1. Coffee maker of the type comprising several infusion cups carried by a rotary support able to bring each of the latter in succession to the location of a particular working station, belonging to a series of stations having different functions, of which one is a station for filling with coffee powder and one is a station for pouring in water for the infusion of the coffee, characterised in that this coffee maker comprises two series of working stations belonging to two different operating cycles, and which are disposed on the same circular trajectory:
a) for a normal operating cycle, in succession:
- an initial station (A) for filling with coffee powder,
- a second station (B) in which there occurs immediately afterwards, both the compression of the powder, then the pouring of the measured amount of hot water for the infusion of the coffee, the device for controlling the movements of the rotary support for the infusion cups (1a, 1b) being able to bring each of them directly from the initial station (A) to the station (B) without an intermediate stop,
- a third station (C) for discharging the coffee-grounds, without stopping the rotary support for the infusion cups, and in the course of the same rotary movement of the latter.
b) and, for a particular cleaning cycle, in succession:
- a station (D) for introducing a dish-washing product, situated between the two first stations (A and B) of the normal cycle,
- a station for pouring in hot water for the cleaning operation proper, this station being constituted by the second station (B) of the normal cycle.

2. Coffee maker according to Claim 1, characterised in that each infusion cup (1a and 1b) comprises a lower filtration piston (5) which can be dismantled, which is equipped with a removable grille (6), and in the particular cleaning cycle an additional station (E) is provided, which is situated after the station (B) for pouring in hot water, this additional station (E) being arranged in order to allow the removal of the parts which can be dismantled, which are provided in each infusion cup, in order to be able to proceed with their complete cleaning by hand should the need arise.

3. Coffee maker according to one of the preceding Claims, characterised in that its control device automatically ensures the initiation of the particular cleaning cycle each time there is a complete stoppage of the operation of the machine, in addition this cycle being able to be initiated by the user at any other time chosen by the latter.

4. Coffee maker according to one of the preceding Claims, characterised in that it also comprises a rinsing cycle comprising the same working stations as the normal operating cycle, but with this difference that there is no pouring of coffee powder at the initial station (A), and in that the control device is governed by a system for controlling the period of time for filling a coffee cup, the arrangement being such that when this period of time exceeds a predetermined time, this control system acts on the control device so that the latter then initiates the rinsing cycle.

5. Coffee maker according to one of the preceding Claims, characterised in that at the location of the second station (B) of the normal cycle, a compressing piston (18), intended to ensure the compression of the coffee powder, is actuated by a direct current motor (24) and means are provided for controlling the intensity of the current passing through this motor, in order to obtain a predetermined compression of the coffee powder in a precise manner.

6. Coffee maker according to one of the preceding Claims, characterised in that the support (2) for the two infusion cups (1a and 1b) is mounted in a removable manner on a vertical shaft (3) set in rotation by an electric motor (12) of the "stepping" type, the fixing of this support (2) being ensured by a wing-nut (4) or any other easily removable fixing member.

7. Coffee maker according to one of the preceding Claims, characterised in that the piston (18) supports a hollow gasket (32) which is expanded by the hot water supplied by the pump, so as to make it possible to provide a piston (18) of such dimensions that it is able to enter and leave the cup without friction.

8. Coffee maker according to Claim 7, characterised in that the gasket (32) is connected by the inside of the piston (18) to a flexible pipe (25a) for the supply of hot water.
